# EUROPEAN PATENT SPECIFICATION

(11) **EP 0 404 241 B1**
(45) Date of publication and mention of the grant of the patent: **28.12.1994**
(21) Application number: 90201567.6
(22) Date of filing: 15.06.1990
(51) Int. Cl.: A01C 5/06, A01C 7/04

(54) **Method and seed drill for placing seed grains into the ground**
Verfahren und Sämaschine zum Aussäen von Getreidesamen in den Boden
Méthode et semoir pour placer les graines de céréales dans le sol

(30) Priority: 16.06.1989 NL 8901532
(43) Date of publication of application: 27.12.1990
(73) Proprietor: KONGSKILDE MASKINFABRIK A/S, DK-4180 Soro (DK)
(72) Inventor: Dekkers, Antonius Petrus, NL-4741 AT Hoeven (NL)
(74) Representative: Konings, Lucien Marie Cornelis Joseph

(56) References cited:
- DE-A- 2 934 121
- FR-A- 1 497 244
- GB-A- 989 145
- US-A- 4 423 788

## Description

The invention relates in the first place to a method as described in the preamble of claim 1.

Such a method is known from the European patent specification 0 038 241 and the German patent specification 2934121.

With each known embodiment of the method stated in the preamble the seed grain is thrown from the seed drill at the outlet of the channel for the pneumatic transport under the combined influence of the speed obtained and of the guiding by the end portion of the transport channel in the direction of the apex of the dihedral angle, which forms the foremost, bottom peripheral plane of the pressure wheel with the bottom of the furrow. The seed grain is therein immediately clamped fixedly in the dihedral angle between the bottom of the furrow and the peripheral plane of the pressure wheel, whereby the seed grain is prevented from bouncing in unpredictable manner to a haphazard position in the furrow.

With the method according to the Russian patent specification 609501 the seed grain is also thrown practically in the direction of the apex of the dihedral angle, but the pressure wheel moves therein up and down together with the transport channel relative to the coulter.

The invention has for its object to mutually position successive seeds of the same row more efficiently, that is, that the variations in the mutual distances of the seed grains are reduced and/or the seed grains are better positioned in their row, whereby the mutual distances of the seed grains in adjacent rows become more uniform. This object is achieved in that the seed grains are thrown from the seed drill at the outlet of the channel for the pneumatic transport under the combined influence of the speed obtained and of the guiding by the end portion of the transport channel in the direction of an impact point of the periphery of the peripheral plane of the pressure roller, which is located at more than twice the height of a seed grain above the level of the lowest point of the pressure wheel.

Surprisingly, it has been found that according to this method, a better accuracy is achieved with respect to the intended positioning of the seed grains.

The impact point is preferably located at at least four times the height of a seed grain above the level of the lowest point of the pressure wheel.

If the furrow is broken open with a coulter which has another strip reaching deeper into the ground under a downwardly converging profile piece, the seed grains are positioned somewhat better in line. Moreover, the coulter employed has little resistance in the ground and there is little wear thereof so that it has a long useful life.

The pressure wheel is preferably driven at a speed that is slightly slower than the forward travel speed of the seed drill.

The invention also relates to and provides a seed drill as claimed in claim 5 and preferred embodiments thereof as claimed in claim 6 to 9.

Mentioned and other features of the invention will be elucidated in the description following hereinafter with reference to a drawing. In the drawing:

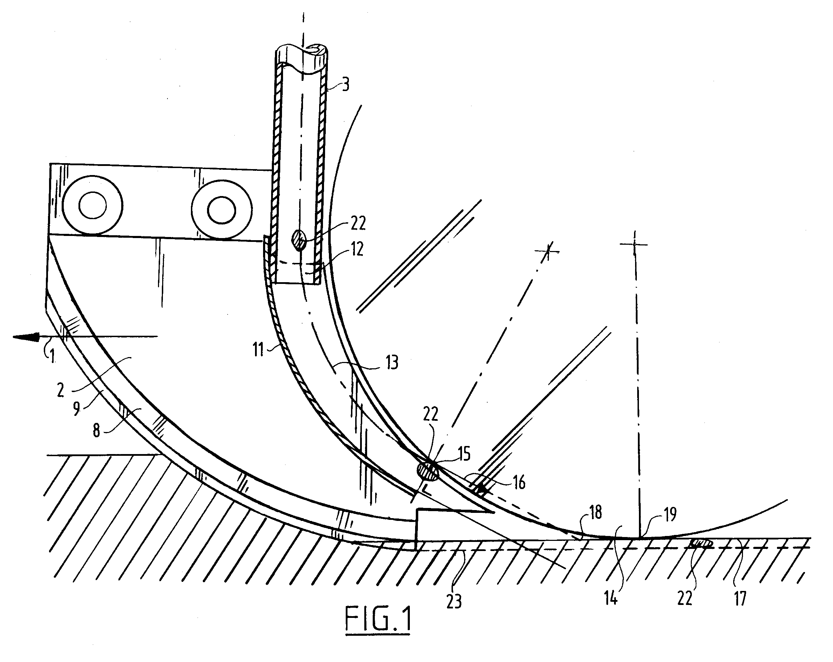

Figure 1 shows a schematic side view of the bottom part of a seed drill according to the invention.
Figure 2 shows on a slightly smaller scale, a practical embodiment of the part of figure 1 with measurements therein indicated in millimetres to show the various dimensions, some of which are important for the invention, at least with respect to their order of magnitude. The design and the dimensions of figures 2 and 3 should be considered as part of the description.
Figure 3 shows a front view according to arrows III-III from figure 2 of the coulter from figure 2.

The seed drill according to the invention has a frame (not drawn), which supports on the ground by means of carrying wheels and which is pulled forward for instance by a tractor at a speed v in the direction of arrow 1. The seed drill has at least one storage holder for seed grains, an individualizer and for each seed row a coulter 2 carried by the frame, to which coulter is connected a seed guide tube 3 for instance in the form of a hose, which is connected to the per se known individualizer. The seed drill preferably has two individualizers which are each connected via a number of, for instance four, seed guide tubes 3 to an equal number of, for instance four, coulters 2.

Each coulter 2 is constructed from two steel side plates 4, whereof the bottom edges 5 formed according to a radius R1 are bent towards each other, with the interpositioning of a curved, vertical, central steel strip 6 which reaches with a portion 9 deeper into the ground 7 than the downwardly converging piece 8 of the coulter 2. Situated between the plates 4 is a curved connecting plate 10 resting on the strip 6 and a seed guiding plate 11 extending thereabove along an arc with radius R2, onto which plate the outlet 12 of the seed guide tube 3 connects smoothly and the heart line 13 of which meets a pressure wheel 14 mounted rotatably in the coulter 2 in an impact point 15 according to a direction 16 which first passes through the pressure wheel 14 and only then reaches the level 17 at a point 18 that still lies in front of the lowest point 19 of the pressure wheel 14. The impact point 15 lies at an angular distance h of at least 20°, but preferably at an angular distance h of about 35 to 40° from the vertical through the axis 20 of the pressure wheel 14.

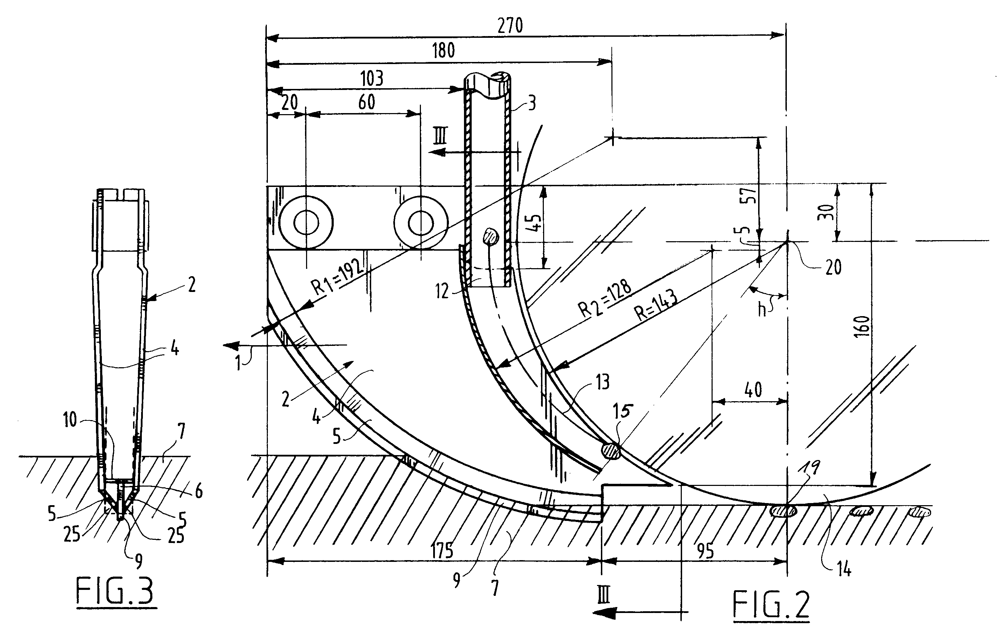

The configuration is preferably as drawn in the figures 2 and 3. The elements of the coulter 2 are welded to each other. The pressure wheel 14 is driven by a transmission mechanism (not drawn) by ground wheels provided with profile at a speed which is slightly lower than the forward speed of the seed drill. This seed drill is particularly suitable for sowing in clay ground and for sowing all sorts of seed, for instance sugar beet seed, maize, sunflower seeds, beans, peas, etc.

The mutual position of coulter 2, seed guiding plate 11 and axis 20 of the pressure wheel 14 is fixed.

The seed grains 22 are guided by the seed guiding plate 11 together with the strong airflow substantially according to the heart line 13 and strike the pressure wheel 14 at the impact point 15, after which they rebound down into the formed, downwardly converging furrow with a central groove 23 formed by the piece 9 of the strip 6. This configuration of the thus made furrow slows down the seed grains 22 in a uniform manner, so that the seed grains no longer jump upward or in any other direction and the mutual distance between the sown seed grains 22 is very uniform. The coulter 2 also converges at the level of the seed guiding plate 11 in downward direction which furthers their seed grain centering.

A per se known furrow closer (not drawn) is optionally situated behind the pressure wheel 14. The pressure wheel 14 is preferably provided at its rear with a scraping device (not drawn) for scraping off any ground that may adhere. The pressure wheel 14 is preferably made of steel, hard rubber or other material.

As shown in figure 3 with dashed lines, the pressure wheel 14 only displaces two triangular ground profiles 25 and presses the groove 23 shut therewith with little pressure. With the method according to the invention the seed growth is good.

## Claims

1. Method for placing in the ground seed grains for so-called precision sowing beds, using a seed drill, which for each furrow contains a coulter (2) which breaks open the furrow, a channel (3) for pneumatic transport of the seed grains (22), which channel (3) has at the location of the furrow an end portion (11) which slopes rearward, and a pressure wheel (14) that presses the disseminated seed grains (22) into the bottom of the furrow, said furrow being broken open using a coulter (2) which has at least one downwardly converging profile piece (8), **characterized in that** seed grains (22) are thrown from the seed drill at the outlet of the channel (3) for the pneumatic transport under the combined influence of the speed obtained and of the guiding by the end portion (11) of the transport channel (3) in the direction of an impact point (15) of the periphery of the peripheral plane of the pressure wheel (14) which impact point (15) is located at more than twice the height of a seed grain (22) above the level (18) of the lowest point (19) of the pressure wheel (14).

2. Method as claimed in claim 1, **characterized in that** the impact point (15) is located at least three times the height of a seed grain (22) above the level (18) of the lowest point (19) of the pressure wheel (14).

3. Method as claimed in claim 1 or 2, **characterized in that** the furrow is broken open with a coulter (2) which has another strip (9) reaching deeper into the ground under the downwardly converging profile piece (8).

4. Method as claimed in claim 1, 2 or 3, **characterized in that** the pressure wheel (14) is driven at a speed which is a little lower than the forward travel speed of the seed drill.

5. Seed drill of the type comprising for each furrow a coulter (2) which breaks open the furrow, a channel (3) for pneumatic transport of seed grains (22), which channel (3) at the location of the furrow having an end portion sloping rearwardly, and comprising a pressure wheel (14) that presses the disseminated seed grains into the furrow, **characterized in that** the end of the channel (3) for pneumatic transport of the grains is directed to an impact point (15) of the periphery of the pressure wheel (14) which lies at an angular distance of more than twenty degrees before the vertical passing through the lowest point (19) of the pressure wheel (14), so that the seed grains (22) are thrown out in the direction of the impact point (15) under the combined influence of the speed obtained and of the guiding by the end portion of the transport channel.

6. Seed drill as claimed in claim 5, **characterized in that** the angular distance is at least equal to 30°.

7. Seed drill as claimed in claim 5 or 6, **characterized in that** the furrow is broken open using a coulter (2) which has at least one downwardly converging profile piece (8).

8. Seed drill as claimed in claim 5, 6 or 7, **characterized in that** the coulter (2) has another strip (9) reaching deeper into the ground under the downwardly converging profile piece (8).

9. Seed drill as claimed in any of the claims 5-8, **characterized in that** the pressure wheel (14) is driven at a speed which is a little lower than the forward travel speed of the seed drill.

## Patentansprüche

1. Verfahren zum Aussäen von Saatkörnern in den Boden für sogenannte Präzisionssaatbeete unter Benutzung einer Sämaschine, die für jede Furche aufweist
ein Pflugmesser (2), das die Furche aufbricht, einen Kanal (3) für pneumatischen Transport der Saatkörner (22), wobei der Kanal (3) an dem Ort der Furche einen Endabschnitt aufweist, der nach hinten geneigt ist, und ein Preßrad (14), das die ausgesäten Saatkörner (22) in den Boden der Furche preßt, wobei die Furche unter Benutzung eines Pflugmessers (2) aufgebrochen wird, das mindestens ein nach unten konvergierendes Profilstück (8) aufweist,
dadurch gekennzeichnet, daß
die Saatkörner (22) von der Sämaschine an dem Auslaß des Kanales (3) für den pneumatischen Transport ausgeworfen werden unter dem vereinten Einfluß der erhaltenen Geschwindigkeit und der Führung durch den Endabschnitt (11) des Transportkanales (3) in die Richtung eines Aufschlagpunktes (15) des Umfanges der Umfangebene des Preßrades (14), wobei der Aufschlagpunkt (15) an mehr als zweimal der Höhe eines Saatkornes (22) oberhalb des Niveaus (18) des untersten Punktes (19) des Preßrades (14) angeordnet ist.

2. Verfahren nach Anspruch 1, dadurch gekennzeichnet,
daß der Aufschlagpunkt (15) mindestens dreimal der Höhe des Saatkornes (22) über dem Niveau (18) des untersten Punktes (19) des Preßrades (14) angeordnet ist.

3. Verfahren nach Anspruch 1 oder 2, dadurch gekennzeichnet,
daß die Furche mit einem Pflugmesser (2) aufgebrochen wird, die einen anderen Streifen (9) aufweist, der tiefer in den Boden unter das nach unten konvergierende Profilstück (8) reicht.

4. Verfahren nach Anspruch 1, 2 oder 3, dadurch gekennzeichnet,
daß das Preßrad (14) mit einer Geschwindigkeit angetrieben wird, die etwas kleiner als die Vorwärtsfahrgeschwindigkeit der Sämaschine ist.

5. Sämaschine der Art, die für jede Furche ein Pflugmesser (2), das die Furche aufbricht, einen Kanal (3) für pneumatischen Transport der Saatkörner (22), wobei der Kanal (3) an dem Ort der Furche einen nach hinten geneigten Endabschnitt aufweist, aufweist und mit einem Preßrad (14), das die ausgesäten Saatkörner in die Furche preßt,
dadurch gekennzeichnet, daß
das Ende des Kanales (3) für pneumatischen Transport der Körner zu einem Aufschlagpunkt (15) des Umfanges des Preßrades (14) gerichtet ist, der an einem Winkelabstand von mehr als 20° vor der Vertikalen liegt, die durch den untersten Punkt (19) des Preßrades (15) geht, so daß die Saatkörner (22) in der Richtung des Aufschlagpunktes (15) ausgeworfen werden unter dem vereinten Einfluß der erhaltenen Geschwindigkeit und der Führung durch den Endabschnitt des Transportkanales.

6. Sämaschine nach Anspruch 5, dadurch gekennzeichnet, daß der Winkelabstand mindestens gleich 30° ist.

7. Sämaschine nach Anspruch 5 oder 6, dadurch gekennzeichnet,
daß die Furche unter Benutzung eines Pflugmessers aufgebrochen wird, die mindestens ein nach unten konvergierendes Profilstück (8) aufweist.

8. Sämaschine nach Anspruch 5, 6 oder 7, dadurch gekennzeichnet,
daß das Pflugmesser (2) einen anderen Streifen (9) aufweist, der tiefer in den Boden unter das nach unten konvergierende Profilstück (8) reicht.

9. Sämaschine nach einem der Ansprüche 5 bis 8,
dadurch gekennzeichnet,
daß das Preßrad (14) mit einer Geschwindigkeit angetrieben wird, die ein wenig kleiner als die Vorwärtsfahrgeschwindigkeit der Sämaschine ist.

## Revendications

1. Procédé pour placer des graines de semences dans le sol pour ce qu'on appelle des semis de précision, utilisant un semoir en ligne qui, pour chaque sillon, contient un coutre (2) qui ouvre le sillon, un canal (3) pour le transport pneumatique des graines de semences (22), lequel canal (3) possède à l'emplacement du sillon une partie d'extrémité (11) qui penche vers l'arrière, et une roue de pression (14) qui presse les graines de semences disséminées (22) au fond du sillon, ledit sillon étant ouvert en utilisant un coutre (2) qui a au moins une pièce profilée convergeant vers le bas (8), caractérisé en ce que les graines de semences (22) sont lancées du semoir en ligne à la sortie du canal (3) pour le transport pneumatique sous l'influence combinée de la vitesse obtenue et du guidage par la partie d'extrémité (11) du canal de transport (3), en direction d'un point d'impact (15) de la périphérie du plan périphérique de la roue de pression (14), lequel point d'impact (15) est situé à plus de deux fois la hauteur de la graine de semence (22) au-dessus du niveau (18) du point le plus bas (19) de la roue de pression (14).

2. Procédé selon la revendication 1, caractérisé en ce que le point d'impact (15) est situé au moins à trois fois la hauteur d'une graine de semence (22) au-dessus du niveau (18) du point le plus bas (19) de la roue de pression (14).

3. Procédé selon la revendication 1 ou 2, caractérisé en ce que le sillon est ouvert à l'aide d'un coutre (2) qui possède une autre lame (9) allant plus profondément dans le sol sous la pièce profilée convergeant vers le bas (8).

4. Procédé selon la revendication 1, 2 ou 3, caractérisé en ce que la roue de pression (14) est entraînée à une vitesse qui est un peu plus faible que la vitesse d'avancement du semoir en ligne.

5. Semoir en ligne du type comprenant un coutre (2) pour chaque sillon qui ouvre le sillon, un canal (3) pour le transport pneumatique des graines de semences (22), lequel canal (3) possède à l'emplacement du sillon une partie d'extrémité penchée vers l'arrière, et comprenant une roue de pression (14) qui presse les graines de semences disséminées dans le sillon, caractérisé en ce que l'extrémité du canal (3) pour le transport pneumatique des graines est dirigé vers un point d'impact (15) de la périphérie de la roue de pression (14) qui se trouve à une distance angulaire de plus de vingt degrés en avant de la verticale passant par le point le plus bas (19) de la roue de pression (14), de sorte que les graines de semences (22) sont expulsées en direction du point d'impact (15) sous l'influence combinée de la vitesse obtenue et du guidage par la partie d'extrémité du canal de transport.

6. Semoir en ligne selon la revendication 5, caractérisé en ce que la distance angulaire est au moins égale à 30°.

7. Semoir en ligne selon la revendication 5 ou 6, caractérisé en ce que le sillon est ouvert à l'aide d'un coutre (2) qui a au moins une pièce profilée convergeant vers le bas (8).

8. Semoir en ligne selon la revendication 5, 6 ou 7, caractérisé en ce que le coutre (2) possède une autre lame (9) pénétrant plus profondément dans le sol sous la pièce profilée convergeant vers le bas (8).

9. Semoir en ligne selon l'une quelconque des revendications 5 à 8, caractérisé en ce que la roue de pression (14) est entraînée à une vitesse qui est un peu plus basse que la vitesse d'avancement du semoir en ligne.
